# EUROPEAN PATENT SPECIFICATION

(11) **EP 4 261 737 B1**
(45) Date of publication and mention of the grant of the patent: **02.09.2026**
(21) Application number: 21913570.4
(22) Date of filing: 17.11.2021
(51) Int. Cl.: G06V 10/25, G06V 10/44, G06V 10/82, G06V 20/56

(54) **ROAD OCCUPANCY INFORMATION DETERMINATION METHOD AND APPARATUS**
VERFAHREN UND VORRICHTUNG ZUR BESTIMMUNG VON STRASSENBELEGUNGSINFORMATIONEN
PROCÉDÉ ET APPAREIL DE DÉTERMINATION D'INFORMATIONS D'OCCUPATION DE ROUTE

(30) Priority: 30.12.2020 CN 202011643276
(43) Date of publication of application: 18.10.2023
(60) Divisional application: 26194505.9
(73) Proprietor: Yinwang Intelligent Technologies Co., Ltd., Shenzhen, Guangdong 518110 (CN)
(72) Inventor: MA, Zhixian, Shenzhen, Guangdong 518129 (CN); WU, Jiajun, Shenzhen, Guangdong 518129 (CN); YUN, Yixiao, Shenzhen, Guangdong 518129 (CN); CHI, Qinghua, Shenzhen, Guangdong 518129 (CN)
(74) Representative: Maiwald GmbH
(86) International application number: PCT/CN2021/131256
(87) International publication number: WO 2022/142827

(56) References cited:
- CN-A- 105 575 027
- CN-A- 109 099 901
- CN-A- 109 359 563
- CN-A- 110 991 320
- CN-A- 111 063 192
- YU XUAN ET AL: "Road Tracking, Lane Segmentation and Obstacle Recognitio Mathematical Morphology", 29 June 1992 (1992-06-29), XP093140158, Retrieved from the Internet <URL:https://people.cmm.minesparis.psl.eu/users/beucher/publi/RTLSORbyMM.pdf> [retrieved on 20240312]
- BEUCHER SERGE ET AL: "Road Segmentation and Obstacle Detection by a Fast Watershed Transformation", 24 October 1994 (1994-10-24), XP093140195, Retrieved from the Internet <URL:https://www.cmm.minesparis.psl.eu/~beucher/publi/intvehic.pdf> [retrieved on 20240312]
- PHAN HUNG NGOC ET AL: "Occlusion vehicle detection algorithm in crowded scene for Traffic Surveillance System", 2017 INTERNATIONAL CONFERENCE ON SYSTEM SCIENCE AND ENGINEERING (ICSSE), IEEE, 21 July 2017 (2017-07-21), pages 215 - 220, XP033150747, DOI: 10.1109/ICSSE.2017.8030868
- HA SYNH ET AL: "Lane Detection in Intelligent Traffic System Using Probabilistic Model", 3 June 2016 (2016-06-03), XP093140204, Retrieved from the Internet <URL:https://www.researchgate.net/profile/Synh-Ha/publication/303763820_Lane_Detection_in_Intelligent_Traffic_System_Using_Probabilistic_Model/links/57513b8008ae6807faf95142/Lane-Detection-in-Intelligent-Traffic-System-Using-Probabilistic-Model.pdf> [retrieved on 20240312]
- SIBEL YENIKAYA ET AL: "Keeping the vehicle on the road", ARXIV, vol. 46, no. 1, 1 October 2013 (2013-10-01), US, pages 1 - 43, XP055285141, ISSN: 0360-0300, DOI: 10.1145/2522968.2522970

## Description

This application claims priority to Chinese Patent Application No. 202011643276.3, filed with the China National Intellectual Property Administration on December 30, 2020 and entitled "METHOD AND APPARATUS FOR DETERMINING ROAD OCCUPANCY INFORMATION" .

### TECHNICAL FIELD

This application relates to the field of computer vision, and in particular, to a method and an apparatus for determining road occupancy information.

### BACKGROUND

With social development, intelligent terminals such as an intelligent transportation device, a smart household device, and a robot are gradually entering people's daily lives. Sensors play a very important role in the intelligent terminals. In a moving process of the intelligent terminals, various sensors, such as a millimeter wave radar, a lidar, a camera, and an ultrasonic radar, installed on the intelligent terminals sense an ambient environment, collect data, identify and track a moving object, identify a static scenario like a lane line or a signboard, and perform route planning by using a navigator and map data. The sensors may sense a risk that may occur and assist in avoidance or even autonomously take necessary avoidance measures, which effectively improves security and comfort of the intelligent terminals.

A road construction area is an area including a plurality of markers such as a traffic cone, a road rail, a warning sign, a construction vehicle, and an engineering person. The road scenario is a main traffic scenario on an urban road, and is also an important factor that affects driving safety of a vehicle. In an advanced driver assistance system (advanced driver assistance system, ADAS), functions of adaptive cruise control (adaptive cruise control, ACC) and autonomous emergency braking (autonomous emergency braking, AEB) that are for vehicle control assistance require that the system can sense a road occupancy condition of an obstacle through the sensor and take corresponding obstacle avoidance and vehicle control measures to improve driving safety. Therefore, it is important to identify the construction area including construction area markers through the sensor. The article by Yu Xuan et al, 29 June 1992 (1992-06-29), XP93140158, refers to "Road Tracking, Lane Segmentation and Obstacle Recognition Mathematical Morphology".

In existing construction area identification, a rectangular marking frame is mainly used to frame a detected construction area marker to identify the road construction area. However, the rectangular marking frame cannot provide an accurate location of the construction area marker on a road surface. As a result, a road occupancy condition of the construction area is not accurately evaluated. Therefore, how to accurately identify a construction area marker to determine road occupancy information of a construction area marker is an urgent problem to be resolved.

### SUMMARY

This application provides a method and an apparatus for determining road occupancy information, to solve a problem of how to accurately identify a construction area marker to determine road occupancy information of a construction area. The invention is set out in the appended set of claims.

According to a first aspect, a method for determining road occupancy information is provided. The method includes: obtaining a first image, and determining a first region of interest ROI based on the first image, where the first ROI includes at least one construction area marker; obtaining a first binary image of the first ROI; performing edge enhancement on the at least one construction area marker that is in the first binary image to obtain a second binary image; obtaining a junction point set of the at least one construction area marker and a road surface based on the second binary image; determining road occupancy information of the at least one construction area marker based on the junction point set of the at least one construction area marker and the road surface; and sending the road occupancy information, where the road occupancy information includes information of a lane on which the at least one construction area marker is located and/or road occupancy range information of a construction area, and the construction area includes the at least one construction area marker.

In the technical solution in this embodiment of this application, accurate location information of the construction area marker is obtained by identifying an edge contour of the at least one construction area marker, to obtain accurate road occupancy information of the accurate construction area marker, which helps an ADAS system formulate a reliable and safe control strategy, to improve driving safety.

With reference to the first aspect, in some implementations of the first aspect, the performing edge enhancement on the at least one construction area marker that is in the first binary image to obtain a second binary image includes: performing a first morphological operation on the first binary image to obtain the first image, and performing a second morphological operation on the first binary image to obtain a second image; performing pixel-wise subtraction between the first image and the second image to obtain a third image; performing independent connected component detection on the first image, the second image, or the first binary image to obtain a fourth image; and performing an operation on the third image and the fourth image by using a label constraint-based watershed algorithm to obtain a fifth image, where the fifth image is the second binary image.

In the technical solution in this embodiment of this application, based on a label constraint watershed image processing algorithm of a morphological operation, enhancement detection is performed on an edge of the construction area marker, different types of construction area markers can be detected, and a generalization capability is strong. In addition, each identified construction area marker has a clear edge without adhesion, so that accuracy of determining the construction area is improved. In addition, an accurate marker contour may be helpful to determine a junction point between the construction area marker and the road surface.

With reference to the first aspect, in some implementations of the first aspect, the method includes: the first morphological operation includes a dilation operation, and the second morphological operation includes an erosion operation.

With reference to the first aspect, in some implementations of the first aspect, the method includes: the first morphological operation includes a dilation operation of M iterations, and the second morphological operation includes an erosion operation of N iterations, where M and N are positive integers greater than or equal to 1.

In the technical solution in this embodiment of this application, a plurality of iterations are helpful to process more noise in an image, and can segment a construction area marker with an adhesive edge in the image, so that an accuracy rate of subsequent determining of an independent connected unit is improved.

With reference to the first aspect, in some implementations of the first aspect, the first ROI includes: obtaining the first ROI based on a lane width, a lane quantity, a first distance, and a second distance, where a lateral length of the first ROI is determined based on the lane width and the lane quantity, and a longitudinal length of the first ROI is determined based on the first distance and the second distance, the first distance indicates a shortest distance in the first image that is obtained after a camera blind spot is excluded and that is between a lane on which a vehicle is located and the vehicle, and the second distance indicates a longest observable distance in the first image between the lane on which the vehicle is located and the vehicle.

In the technical solution in this embodiment of this application, based on a method for obtaining the first ROI that is calibrated by a camera and constrained by the lane width, the lane quantity, the first distance, and the second distance, a detection range of an algorithm can be narrowed, a processing time delay can be reduced, and efficiency of a perception system can be improved.

In some possible implementations, to further improve accuracy of a detection result of the construction area, reduce a detection time delay, and improve algorithm efficiency, the first ROI can be detected through movable target detection or by using a semantic segmentation module, to screen out a movable target in the first ROI.

With reference to the first aspect, in some implementations of the first aspect, the obtaining a first binary image of the first ROI includes: performing a three-channel weighted sum operation based on a color space on the first ROI to obtain a single-channel image of the first ROI, where the color space includes an RGB color space, a YUV color space, or an XYZ color space; and performing binarization on the single-channel image to obtain the first binary image of the first ROI.

In the technical solution of this embodiment of this application, a three-channel weighted sum algorithm based on a color space for obtaining the construction area marker can effectively extract a construction area marker with a plurality of colors, support detection for markers with the plurality of colors in a national standard or a non-national standard due to being insensitive to whether the marker has a strip texture, and have strong generalization.

With reference to the first aspect, in some implementations of the first aspect, the obtaining a junction point set of the at least one construction area marker and a road surface includes: obtaining the junction point set of the at least one construction area marker and the road surface based on a camera calibration parameter and a projection theorem.

With reference to the first aspect, in some implementations of the first aspect, the method includes: clustering, based on a first clustering method, the junction point set of the at least one construction area marker and the road surface to determine different construction areas, where the first clustering method is that a distance between junction point sets that are of the at least one construction area marker and the road surface is less than or equal to a minimum distance threshold.

In the technical solution in this embodiment of this application, a clustered construction area marker separates discontinuous construction areas, and space between different construction areas may be used as available space in a vehicle control strategy, to improve road a rate of utilization.

With reference to the first aspect, in some implementations of the first aspect, the determining road occupancy information of the at least one construction area marker includes: detecting a lane line to obtain location information of the lane line in a vehicle coordinate system; obtaining, based on the junction point set of the at least one construction area marker and the road surface and the location information of the lane line, the information of the lane on which the at least one construction area marker is located; obtaining the road occupancy range information of the construction area based on the junction point set of the at least one construction area marker and the road surface; and determining the road occupancy information of the at least one construction area marker based on the information of the lane on which the at least one construction area marker is located and the road occupancy range information of the construction area.

In the technical solution in this embodiment of this application, a vehicle control module may effectively plan a vehicle driving route based on reported road occupancy information and road occupancy range information of the construction area. In addition, compared with a complex solution based on a GPS and a high definition map, the reported solution is simpler and more effective. Furthermore, the road occupancy range information of the construction area may provide more abundant information for the vehicle control module, so that accuracy of a vehicle control decision is improved.

With reference to the first aspect, in some implementations of the first aspect, the road occupancy information of the at least on construction area marker further includes: track and update the road occupancy information of the at least one construction area marker based on road occupancy information of the at least one construction area marker in a previous frame.

In some possible implementations, a clustered construction area may be tracked based on a feature point matching algorithm, or a motion equation may be established, based on a Kalman filter algorithm, for a fitting curve of the junction point set of the construction area marker and the road surface, to track the curve and update a status of the curve.

In the technical solution in this embodiment of this application, based on tracking and updating for a road occupancy condition of multi-frame fusion, accuracy and stability of a detection result of the construction area can be improved.

According to a second aspect, an apparatus for determining road occupancy information is provided. The apparatus includes a collection module, a processing module, and a transceiver module, where the collection module is configured to obtain a first image; the processing module is configured to: determine a first region of interest ROI based on the first image, where the first ROI includes at least one construction area marker; obtain a first binary image of the first ROI; perform edge enhancement on the at least one construction area marker that is in the first binary image to obtain a second binary image; obtain a junction point set of the at least one construction area marker and a road surface based on the second binary image; and determine road occupancy information of the at least one construction area marker based on the junction point set of the at least one construction area marker and the road surface; and the transceiver module is configured to send the road occupancy information, where the road occupancy information includes information of a lane on which the at least one construction area marker is located and/or road occupancy range information of a construction area, and the construction area includes the at least one construction area marker.

In the technical solution in this embodiment of this application, accurate location information of the construction area marker is obtained by identifying an edge contour of the at least one construction area marker, to obtain accurate road occupancy information of the accurate construction area marker, which helps an ADAS system formulate a reliable and safe control strategy, to improve driving safety.

With reference to the second aspect, in some implementations of the second aspect, the processing module is further configured to: perform a first morphological operation on the first binary image to obtain a first image, and perform a second morphological operation on the first binary image to obtain a second image; perform pixel-wise subtraction between the first image and the second image to obtain a third image; perform independent connected component detection on the first image, the second image, or the first binary image to obtain a fourth image; and perform an operation on the third image and the fourth image by using a label constraint-based watershed algorithm to obtain a fifth image, where the fifth image is the second binary image.

In the technical solution in this embodiment of this application, based on a label constraint watershed image processing algorithm of a morphological operation, enhancement detection is performed on an edge of the construction area marker, different types of construction area markers can be detected, and a generalization capability is strong. In addition, each identified construction area marker has a clear edge without adhesion, so that accuracy of determining the construction area is improved. In addition, an accurate marker contour may be helpful to determine a junction point between the construction area marker and the road surface.

With reference to the second aspect, in some implementations of the second aspect, the apparatus includes: the first morphological operation includes a dilation operation, and the second morphological operation includes an erosion operation.

With reference to the second aspect, in some implementations of the second aspect, the apparatus includes: the first morphological operation includes a dilation operation of M iterations, and the second morphological operation includes an erosion operation of N iterations, where M and N are positive integers greater than or equal to 1.

In the technical solution in this embodiment of this application, a plurality of iterations are helpful to process more noise in an image, and can segment a construction area marker with an adhesive edge in the image, so that an accuracy rate of subsequent determining of an independent connected unit is improved.

With reference to the second aspect, in some implementations of the second aspect, the processing module is further configured to: obtain the first ROI based on a lane width, a lane quantity, a first distance, and a second distance, where a lateral length of the first ROI is determined based on the lane width and the lane quantity, a longitudinal length of the first ROI is determined based on the first distance and the second distance, the first distance indicates a shortest distance in the first image that is obtained after a camera blind spot is excluded and that is between a lane on which a vehicle is located and the vehicle, and the second distance indicates a longest observable distance in the first image between the lane on which the vehicle is located and the vehicle.

In the technical solution in this embodiment of this application, based on a method for obtaining the first ROI that is calibrated by a camera and constrained by the lane width, the lane quantity, the first distance, and the second distance, a detection range of an algorithm can be narrowed, a processing time delay can be reduced, and efficiency of a perception system can be improved.

In some possible implementations, to further improve accuracy of a detection result of the construction area, reduce a detection time delay, and improve algorithm efficiency, the first ROI can be detected through movable target detection or by using a semantic segmentation module, to screen out a movable target in the first ROI.

With reference to the second aspect, in some implementations of the second aspect, the processing module is further configured to: perform three-channel weighted sum operation based on a color space on the first ROI to obtain a single-channel image of the first ROI, where the color space includes RGB color space, YUV color space, or XYZ color space; and perform binarization on the single-channel image to obtain the first binary image of the first ROI.

In the technical solution of this embodiment of this application, a three-channel weighted sum algorithm based on a color space for obtaining the construction area marker can effectively extract a construction area marker with a plurality of colors, support detection for markers with the plurality of colors in a national standard or a non-national standard due to being insensitive to whether the marker has a strip texture, and have strong generalization.

With reference to the second aspect, in some implementations of the second aspect, the processing module is further configured to: obtain the junction point set of the at least one construction area marker and the road surface based on a camera calibration parameter and a projection theorem.

With reference to the second aspect, in some implementations of the second aspect, the processing module is further configured to: cluster, based on a first clustering method, the junction point set of the at least one construction area marker and the road surface to determine different construction areas, where the first clustering method is that a distance between junction point sets that are of the at least one construction area marker and the road surface is less than or equal to a minimum distance threshold.

In the technical solution in this embodiment of this application, a clustered construction area marker separates discontinuous construction areas, and space between different construction areas may be used as available space in a vehicle control strategy, to improve road a rate of utilization.

With reference to the second aspect, in some implementations of the second aspect, the processing module is further configured to: detect a lane line to obtain location information of the lane line in a vehicle coordinate system; obtain, based on the junction point set of the at least one construction area marker and the road surface and the location information of the lane line, the information of the lane on which the at least one construction area marker is located; obtain the road occupancy range information of the construction area based on the junction point set of the at least one construction area marker and the road surface; and determine the road occupancy information of the at least one construction area marker based on the information of the lane on which the at least one construction area marker is located and the road occupancy range information of the construction area.

In the technical solution in this embodiment of this application, a vehicle control module may effectively plan a vehicle driving route based on reported road occupancy information and road occupancy range information of the construction area. In addition, compared with a complex solution based on a GPS and a high definition map, the reported solution is simpler and more effective. Furthermore, the road occupancy range information of the construction area may provide more abundant information for the vehicle control module, so that accuracy of a vehicle control decision is improved.

With reference to the second aspect, in some implementations of the second aspect, the processing module is further configured to: track and update the road occupancy information of the at least one construction area marker based on road occupancy information of the at least one construction area marker in a previous frame.

In some possible implementations, a clustered construction area may be tracked based on a feature point matching algorithm, or a motion equation may be established, based on a Kalman filter algorithm, for a fitting curve of the junction point set of the construction area marker and the road surface, to track the curve and update a status of the curve.

In the technical solution in this embodiment of this application, based on tracking and updating for a road occupancy condition of multi-frame fusion, accuracy and stability of a detection result of the construction area can be improved.

According to a third aspect, an apparatus is provided, and may include a camera, a processor, and a transceiver. The processor is configured to invoke a computer program from a memory and run the computer program. When the program is run, the processor performs the method according to the first aspect or any one of the possible implementations of the first aspect.

According to a fourth aspect, a computer-readable medium is provided, and is configured to store a computer program. The computer program includes instructions for performing the method according to the first aspect or any one of the possible implementations of the first aspect.

According to a fifth aspect, a chip is provided, and may include a processor and a data interface. The processor invokes a computer program from a memory through the data interface and runs the computer program, so that a device in which the chip is installed performs instructions of the method according to the first aspect or any one of the possible implementations of the first aspect.

According to a sixth aspect, a vehicle is provided. The vehicle performs instructions of the method according to the first aspect or any one of the possible implementations of the first aspect.

### BRIEF DESCRIPTION OF DRAWINGS

FIG. 1 is a schematic diagram of a road construction area according to an embodiment of this application;
FIG. 2 is a schematic flowchart of identifying a road construction area marker according to an embodiment of this application;
FIG. 3 is a schematic diagram of obtaining a region of interest of a construction area according to an embodiment of this application;
FIG. 4 is a schematic flowchart of obtaining a construction area marker according to an embodiment of this application;
FIG. 5 is a schematic flowchart of detecting a contour of a construction area marker according to an embodiment of this application;
FIG. 6 is a schematic diagram of a clustering result of a construction area marker according to an embodiment of this application;
FIG. 7 is a schematic flowchart of summarizing and reporting a road occupancy condition of a construction area according to an embodiment of this application;
FIG. 8 is a schematic diagram of YUV420SP image storage according to an embodiment of this application;
FIG. 9 is a schematic block diagram of an apparatus for determining road occupancy information according to an embodiment of this application; and
FIG. 10 is a schematic block diagram of another apparatus for determining road occupancy information according to an embodiment of this application.

### DESCRIPTION OF EMBODIMENTS

The following describes technical solutions of this application with reference to accompanying drawings.

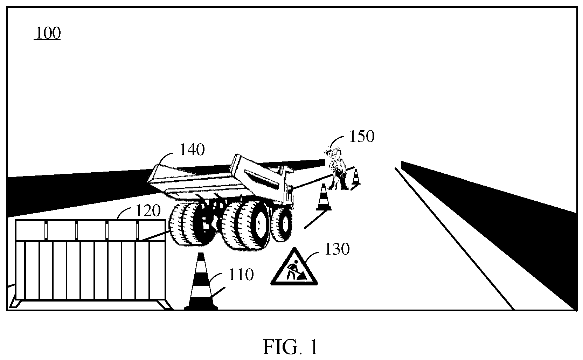

FIG. 1 is a schematic diagram of a road construction area that may be applied to an embodiment of this application. FIG. 1 may be a front image 100 obtained by a camera on a vehicle.

The image 100 includes a road construction area including a plurality of markers such as a traffic cone 110, a road rail 120, a warning sign 130, a construction vehicle 140, and/or an engineering person 150. Although the road construction area markers can be classified as obstacles, the construction area has higher-level semantic information. Therefore, a millimeter wave radar (Radar) does not have a capability of sensing a complex construction area. Sensors used in a current road construction area detection solution include two types: a lidar (Lidar) and a camera (Camera). The camera has advantages such as low costs, a small size, easy deployment, and easy maintenance, and is therefore widely applied.

For identification of the road construction area marker, current camera-based sensing methods may be classified into two types: (1) A method based on a conventional image processing operator. For example, a template matching manner is used to search for an area in which the construction area marker in an image is located. (2) A method for target identification and detection based on machine learning or deep learning. For example, a classifier is designed to classify pixels or areas in an image based on a color or texture feature of the construction area marker, to further determine a construction area.

The first type of camera-based sensing method mainly focuses on a construction area marker, like a traffic cone and a traffic column, that is located in or around a road and that has a columnar feature like a cone, a cylinder, and a rod. Whether a construction area exists in a current image or video frame is determined by a quantity of construction area markers that are detected through statistics. A vehicle controller outputs, based on a determining result, a signal indicating that the vehicle approaches the construction area.

Disadvantages of such type of method for identifying the construction area marker are as follows: First, a type of the construction area marker that is detected is single, and a detection capability for a non-columnar marker, for example, the road rail 120, is low. Second, whether the construction area exists in the current image or video frame is determined by the quantity of construction area markers that are detected through statistics, which has a risk of false detection. Finally, a lane on which the construction area is located is not marked. Only whether the construction area exists is used as a determining signal of vehicle control, which does not clearly describe how to determine whether the vehicle has left the area.

The second type of camera-based sensing method mainly trains a convolutional neural network (CNN) for a group of images including the construction area marker, then the convolutional neural network is used to classify and identify such construction area marker, and an identified construction area marker is marked in a form of a two-dimensional marking frame.

Disadvantages of such type of method for identifying the construction area marker are as follows: First, the two-dimensional marking frame may introduce a potential positioning error. Second, a CNN-based or machine learning-based method has strong dependence on training data, and the method has a high requirement on a computing capability of a sensing device, like a graphics processing unit GPU and a computing processing unit CPU, and has a high requirement on hardware storage space. As a result, the method is not suitable for deployment on a platform with low power consumption and a low computing capability. Finally, the method can only determine a road occupancy condition of the construction area, but cannot determine a range occupied by the construction area in the lane, and cannot provide plenty of assistance in subsequent decision-making of a vehicle control module.

Another current solution is to mainly detect a yellow, orange, or red construction area marker (including the traffic cone, the traffic column, and the road rail). In this technical solution, a three-channel RGB image obtained by the camera is processed to obtain two types of images:
(1) luminance graph, with a calculation formula ${I}_{B} = \frac{R + G + B}{3.0}$; and
(2) orange chart, with a calculation formula ${I}_{O} = \frac{R - G}{R + G + 10} \times 255.0$.

For the two types of images, the luminance graph and the orange chart are traversed by using a template matching-based sliding window method, and an area with a bright orange texture is detected; and whether the area includes a stripe is determined based on the classifier, to determine whether the area is a construction area.

Disadvantages of the method for identifying the construction area marker are as follows: First, only a construction area marker with a yellow, orange, or red color feature is detected, and for a construction area marker with another color, the method does not have a detection capability. In addition, only a construction area marker with a stripe texture is detected, and for a construction area marker with a single color, the method does not have the detection capability. Second, the template matching-based sliding window method is used for a high-resolution image, which has a risk of high processing time delay, and a selected template scale affects accuracy of detection. Finally, this method cannot determine the road occupancy condition of the construction area marker.

To resolve the foregoing defects in this scenario, embodiments of this application provide a method and an apparatus for determining road occupancy information of a road construction area.

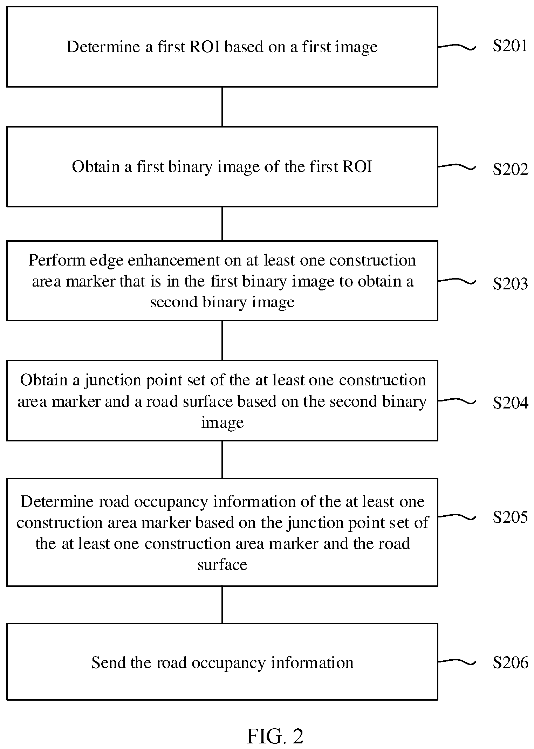

FIG. 2 is a schematic flowchart of identifying a road construction area marker according to an embodiment of this application.

S201: Capture a first image by using a camera on a movable platform, and determine a first region of interest (region of interest, ROI) based on the first image, where the first image is a road picture, and the first ROI indicates an ROI image of a road construction area to-be-detected and includes at least one construction area marker.

The camera may be installed in front of the movable platform, and is mainly configured to collect a road original picture or a video frame. The movable platform may be a vehicle, an uncrewed aerial vehicle, a railway train, a ship, and the like, which is not limited in embodiments of this application.

The camera may be an around view camera, a monocular camera, a binocular camera, and the like, which is not limited in embodiments of this application.

S202: Obtain a first binary image of the first ROI in manners of a three-channel weighted sum algorithm based on a color space and binarization.

Optionally, before S202 or in S201, the first ROI may be detected through movable target detection or by using a semantic segmentation module, to screen out a movable target in the first ROI. The movable target may be a normal pedestrian, a normal vehicle or a normal road rail. The normal pedestrian is different from an engineering person, and a difference lies in that the engineering person wears construction clothing. The normal vehicle is different from a construction vehicle, and a difference lies in that a color of the construction vehicle is different from a color of the normal vehicle. The normal road rail is different from a construction area road rail, and a difference lies in that the normal road rail is located on a lane boundary line and does not belong to a trapezoidal lane area 301, and a color of the construction area road rail is different from a color of the normal road rail. The movable target may further be a suspended construction area marker on a shelf of a construction vehicle that is driving normally on a road, which is not limited in these embodiments.

Herein, the movable target detection and semantic segmentation are introduced to constrain the first ROI, so that accuracy of a detection result of the construction area can be further improved. In addition, after the foregoing constraint is introduced, a quantity of ROIs of an independent construction area marker is reduced, so that a detection time delay can be effectively reduced, and algorithm efficiency can be improved.

S203: Perform, based on a label constraint watershed image processing algorithm of a morphological operation, edge enhancement on the at least one construction area marker that is in the first binary image, to obtain a second binary image.

S204: Obtain a junction point set of the at least one construction area marker and a road surface based on the second binary image.

S205: Determine road occupancy information of the at least one construction area marker based on the junction point set of the at least one construction area marker and the road surface.

S206: Send the road occupancy information, where the road occupancy information includes information of a lane on which the at least one construction area marker is located and/or road occupancy range information of a construction area, and the construction area includes the at least one construction area marker.

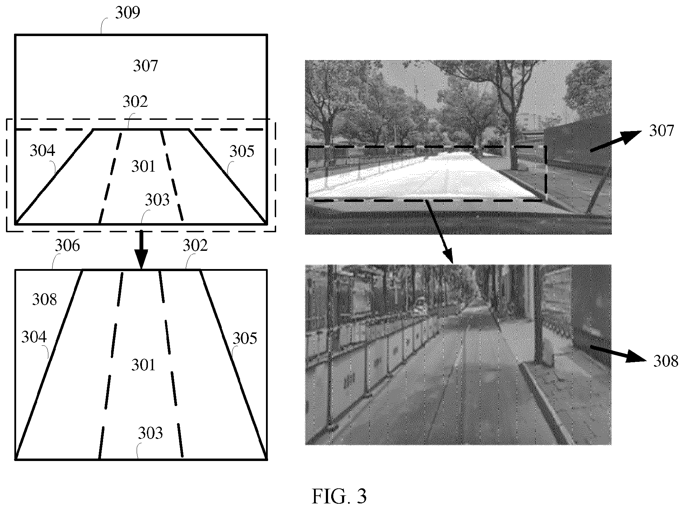

The following describes steps from S201 to S205 in detail with reference to FIG. 3 to FIG. 7.

FIG. 3 is a schematic diagram of obtaining a region of interest of a construction area according to an embodiment of this application. FIG. 3 is a specific implementation process of S201.

A trapezoidal lane area 301 is obtained from an area 307 that is of an original image obtained by the camera or that is framed by a video frame rectangular frame 309, based on a projection theorem and using an offline or online calibration parameter of a camera carried on a movable platform. Boundaries of the trapezoidal lane area 301 in a longitudinal direction are a top edge 302 and a bottom edge 303 that respectively correspond to a preset second distance and first distance of an ego vehicle. The second distance indicates a longest observable distance in the first image between a lane on which a vehicle is located and the vehicle. The first distance indicates a shortest distance in the first image that is obtained after a camera blind spot is excluded and that is between the lane on which the vehicle is located and the vehicle. Boundaries of the trapezoidal lane area 301 in a lateral direction are a waist 304 and a waist 305 that are determined based on a lane width and a lane quantity.

In an example of a bidirectional six-lane urban road, an internationally specified lane width is 3.5 meters, and the boundaries in the lateral direction of the trapezoidal lane area 301 need to include a range of three lanes which cover a driving direction of the ego vehicle. If the ego vehicle travels in the middle of a middle lane, a value of a left side of the driving direction of the ego vehicle is negative, and a value of a right side of the driving direction is positive, the boundaries in the lateral direction may be set to [-5.25, 5.25] meters. If the ego vehicle drives in the middle of a left lane, the boundaries in the lateral direction may be set to [-1.75, 8.75] meters. If the ego vehicle drives in the middle of a right lane, the boundaries in the lateral direction may be set to [-8.75, 1.75] meters.

It should be understood that different road types correspond to different lane widths and quantities. Therefore, boundary lines of trapezoidal road areas 301 of different road types are also set differently, which are not limited in embodiments of this application.

It should be understood that the first distance is related to a camera installation location. For example, when the camera is installed on a front windshield of the vehicle, there is an observation blind spot for an image captured by the camera at the head of the vehicle. Therefore, the first distance is greater than a distance from the camera to the head of the vehicle.

It should be understood that the second distance is related to image resolution, a capability of a detection module, and a longest detection distance required by the vehicle control module. The second distance is usually set to be determined by a location of a vanishing point (vanishing point) in the first image. To be specific, the second distance is the longest observable distance between the lane on which the vehicle is located and the vehicle under projection constraint.

A first ROI 308 framed by an external rectangular frame 306 of the trapezoidal lane area 301 is obtained.

Optionally, scaling transformation is performed on the first ROI 308. For example, the first ROI 308 may be transformed to resolution of 1280×720 pixels, which is not limited in these embodiments.

It should be understood that, performing scaling transformation on the obtained first ROI 308 is to reduce resolution of an original first ROI 308, and reduce a subsequent calculation amount for identifying the construction area marker.

Based on a method for obtaining the first ROI that is calibrated by the camera and constrained by the lane width, the lane quantity, the first distance, and the second distance, a detection range of an algorithm can be narrowed, a processing time delay can be reduced, and efficiency of a perception system can be improved.

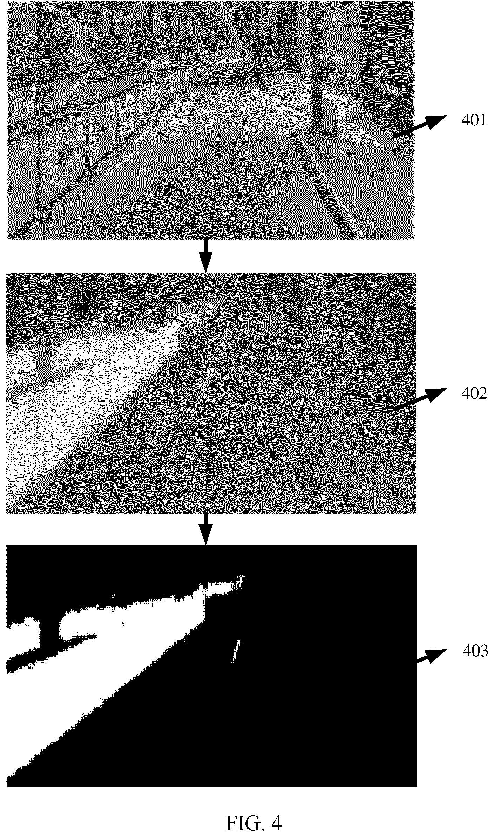

FIG. 4 is a schematic flowchart of obtaining a construction area marker according to an embodiment of this application. FIG. 4 is a specific implementation process of step S202.

A first ROI 401, corresponding to the first ROI 308 in FIG. 3, is a three-channel image whose resolution is *W* × *H* pixels. It should be understood that, a specific resolution of the first ROI 308 is not limited in embodiments of this application, and is less than or equal to the resolution of the first ROI 401 before compression.

The color space may be an RGB (or BGR) color space, a YUV color space, or an XYZ color space, which is not limited in these embodiments.

For example, if the RGB (or BGR) color space is used, three channels may respectively correspond to three primary colors: red (R), green (G), and blue (B). A difference between the RGB color space and the BRG color space is that storage locations are different. Pixel points are processed by using a three-channel weighted sum method in formula (1), and a three-channel image 401 is compressed into a single-channel image 402. ${I}_{1 c} = {a}_{R} ⋅ R + {a}_{G} ⋅ G + {a}_{B} ⋅ B$

Settings of weighting coefficients *a_{R}, a_{G}*, and *a_{B}* of the three channels in the formula (1) are related to a color of the construction area marker. To be specific, the weighting coefficients of the three channels are determined based on the color of the construction area marker. For example, if the color of construction area marker is red, orange, or yellow, the weighting coefficients *a_{R}, a_{G},* and *a_{B}* in the formula (1) may be set to 0.5, -0.25, and -0.25 respectively.

It should be understood that, in this embodiment of this application, the color of the construction area marker is first considered as red, orange, or yellow. If the construction area marker is in another color, for example, blue or green, the single-channel image 402 may be obtained by using a similar coefficient, which is not limited in embodiments of this application.

The three-channel weighted sum algorithm based on a color space for obtaining the construction area marker can effectively extract a construction area marker with a plurality of colors, support detection for markers with the plurality of colors in a national standard or a non-national standard due to being insensitive to whether the marker has a strip texture, and have strong generalization.

If the YUV color space is used, Y indicates luminance, and U and V indicate chrominance which are used to describe a color and saturation of an image. The RGB color space is converted into the YUV color space by using a formula (2-1) or (2-2), pixels are processed, and the three-channel RGB image 401 is compressed into a V-channel image 402, where the formula (2-1) and the formula (2-2) are respectively applicable to digital television coding standards ITU-R BT.601 and BT.709. ${I}_{V} = 0.615 R - 0.515 G - 0.100 B$ ${I}_{V} = 0.615 R - 0.559 G - 0.056 B$

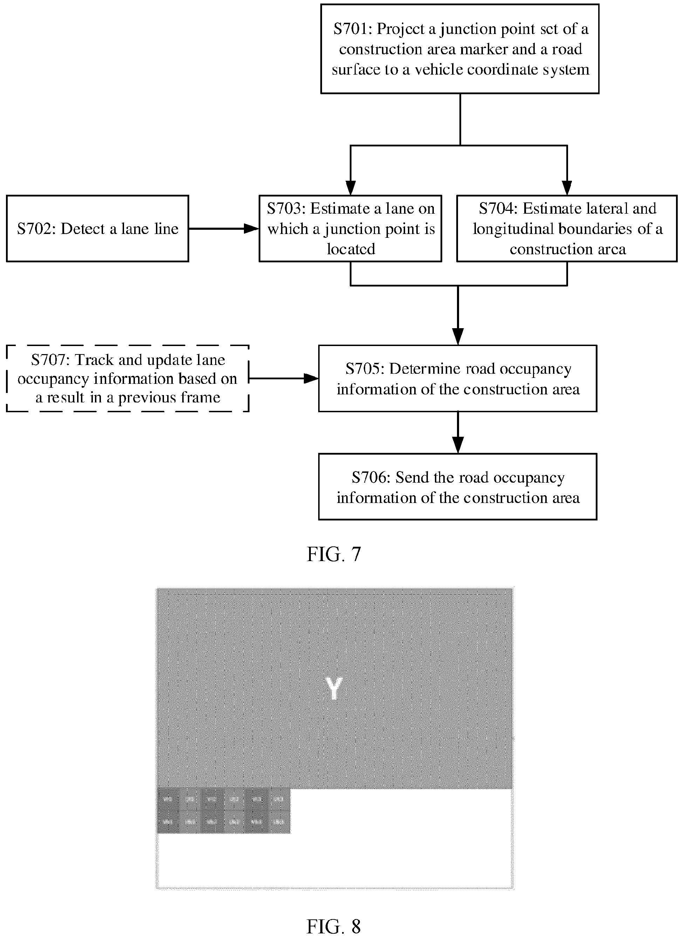

A storage manner of the YUV color space has features of small memory space occupation and high data access efficiency, the storage manner may be of a YUV420SP format. As shown in FIG. 8, the storage manner of the YUV color space is not limited in embodiments of this application.

Therefore, based on the construction area marker obtained by the YUV color space, execution efficiency of construction area detection procedure can be further improved.

If the XYZ color space is used, a new colorimetric system is established by using three hypothetical primary colors X, Y, and Z on the basis of the RGB color space. A formula (3) indicates a conversion relationship between the XYZ color space and the RGB color space. $\left[\begin{matrix}R \\ G \\ B\end{matrix}\right] = \left[\begin{matrix}{t}_{11} & {t}_{12} & {t}_{13} \\ {t}_{21} & {t}_{22} & {t}_{23} \\ {t}_{31} & {t}_{32} & {t}_{33}\end{matrix}\right] \left[\begin{matrix}X \\ Y \\ Z\end{matrix}\right]$

Coefficients in the formula (3) may be determined according to a standard formulated by the International Commission on Illumination (CIE). For example, when a reference standard is CIE-1931, *t*₁₁ =0.418, *t*₁₂ = 0.159, *t*₁₃ = 0.083, *t*₂₁ =0.091, *t*₂₂ = 0.252, *t*₂₃ = 0.016, *t*₃₁ = 0.001, *t*₃₂ = 0.003, and *t*₃₃ = 0.179 may be selected. The coefficient in the formula (3) may be alternatively determined based on another transformation matrix, for example, opRGB, sRGB, and the like, which is not limited in embodiments of this application.

The formula (3) is substituted into the formula (1), to obtain a three-channel weighted sum formula (4). Pixels are processed by using the three-channel weighted sum method, and the three-channel image 401 is compressed into the single-channel image 402. ${I}_{1 c} = {a}_{R} \left({t}_{11}X+{t}_{12}Y+{t}_{13}Z\right) + {a}_{G} \left({t}_{21}X+{t}_{22}Y+{t}_{23}Z\right) + {a}_{B} \left({t}_{31}X+{t}_{32}Y+{t}_{33}Z\right)$

The RGB (or BGR) color space is a subset of the XYZ color space in this embodiment of this application. Therefore, more color combinations may be described based on the XYZ color space, so that a capability of representing the construction area marker can be improved.

The method for obtaining the construction area marker by using the three-channel weighted sum based on a color space is applicable to a plurality of color spaces such as RGB, YUV and XYZ, and can adapt to a plurality of images or video frame formats.

Binarization is performed on the single-channel image 402 by using a formula (5) to obtain a first binary image 403. Values corresponding to pixels whose pixel values are between a lower threshold *T_{B}* and an upper threshold *T_{U}* are set to 1, which corresponds to a white area of the first binary image 403, that is, an obtained area of the construction area marker. Other values of pixels are set to 0, which corresponds to a black area of the first binary image 403, that is, another area except the area of the construction area marker. Values of the lower threshold *T_{B}* and the upper threshold *T_{U}* of the pixel values are based on a statistical result of the pixel values of the marker area. ${I}_{bin} \left(u, ν\right) = \left\{\begin{matrix}1 , & if {T}_{B} \leq {I}_{bin} \left(u, ν\right) \leq {T}_{U} \\ 0 , & otherwise\end{matrix}\right.$

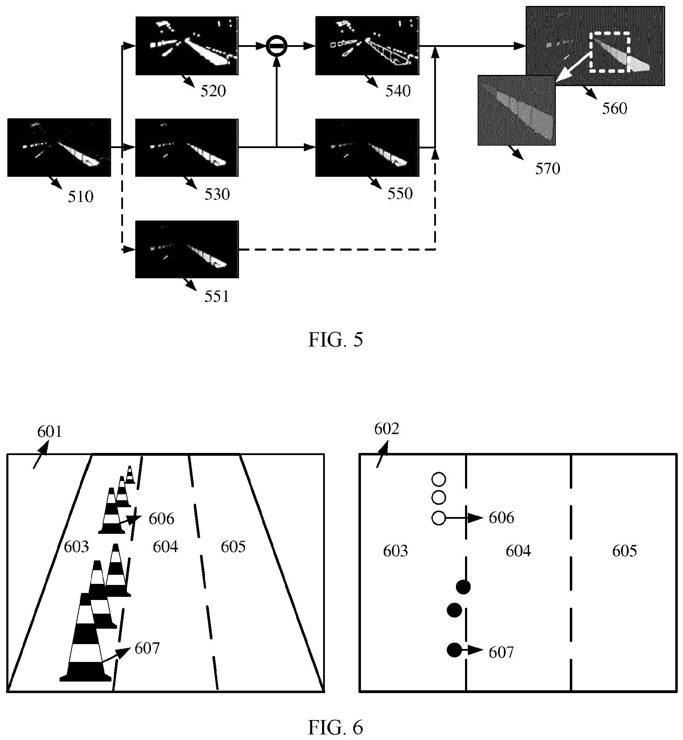

FIG. 5 is a schematic flowchart of contour detection of a construction area marker according to an embodiment of this application. FIG. 5 is a specific implementation process of S203.

An image 510, corresponding to the first binary image 403 of the construction area marker in FIG. 4, is a binary image of a construction area marker whose edge contour is to be enhanced.

It should be understood that a watershed image processing algorithm is a segmentation method of mathematical morphology based on a topology theory. The algorithm is very sensitive to noise, and an excessive segmentation condition may occur. However, a label constraint watershed image processing algorithm can avoid segmenting a small noise extreme value area. To further enhance an edge of the construction area marker, a morphological operation is introduced. Basic morphological operations are dilation and erosion. A dilation operation is mainly used to combine an area and background points around the area into a whole. An erosion operation is mainly used to eliminate edge interference caused by pixel connection in connected areas or adjacent areas.

The dilation operation and the erosion operation are performed on the first binary image 510, to respectively obtain a first image 520 after the dilation operation and a second image 530 after the erosion operation.

When the morphological operation is performed on the first binary image 510, a convolution kernel K defined in a formula (6) may be used, or a convolution kernel in another form like a convolution kernel that obeys $N \left({μ}_{u}, {μ}_{ν}, {σ}_{x}^{2}, {σ}_{y}^{2}\right)$ Gaussian distribution may be used, which is not limited in embodiments of this application. In addition, a size of the convolution kernel may be adjusted based on an actual condition. For example, a convolution kernel size in the formula (6) may be adjusted to 5 × 5, which is not limited in embodiments of this application. $K = \left[\begin{matrix}0 & 1 & 0 \\ 1 & 1 & 1 \\ 0 & 1 & 0\end{matrix}\right]$

The convolution kernel that obeys the Gaussian distribution can obtain a smoother edge processing effect in image morphological dilation and erosion operations.

It should be understood that the dilation operation may perform M iterations, and the erosion operation may perform N iterations, where M and N are positive integers greater than or equal to 1. For example, the dilation operation performs three iterations, and the erosion operation performs one iteration. A specific quantity of iterations is not limited in embodiments of this application.

A plurality of iterations are helpful to process more noise in an image, and can segment a construction area marker with an adhesive edge in the image, so that an accuracy rate of subsequent determining of an independent connected unit is improved.

A pixel-wise subtraction operation is performed between the first image 520 obtained after the dilation operation and the second image 530 obtained after the erosion operation, to obtain a third image 540 of a potential edge of the construction area marker. An area with a non-zero value in the image 540, that is, a white area, is the potential edge of the construction area marker.

Independent connected component detection is performed on the second image 530, and pixels in independent connected units that are different are separately filled by using positive integers of different values, to obtain an image 550 after the connected component detection.

Optionally, the independent connected component detection may be further performed on the first binary image 510, to obtain an image 551 after the connected component detection. It should be understood that both the image 550 and the image 551 are fourth images after the connected component detection, and both may be used as label constraints for watershed image processing.

The image 550 or 551 after the connected component detection is combined with the third image 540, and the watershed algorithm is used to fill and enhance the edge of the connected units of the construction area marker, to obtain a fifth image 560 with the enhanced edge of the construction area marker. An image 570 is a partially enlarged image of the fifth image 560, and areas with different grayscale values indicate different independent connected areas, or may be understood as different construction area markers.

Based on a label constraint watershed image processing algorithm of a morphological operation, enhancement detection is performed on an edge of the construction area marker, different types of construction area markers can be detected, and a generalization capability is strong. In addition, each identified construction area marker has a clear edge without adhesion, so that accuracy of determining the construction area is improved. Furthermore, the method may obtain an accurate marker edge contour, to obtain an accurate junction point between the construction area marker and the road surface, and is particularly applicable to a non-columnar marker like a road rail.

FIG. 6 is a schematic diagram of a clustering result of a construction area marker according to an embodiment of this application. FIG. 6 is a specific implementation process of S204.

An image 601, corresponding to the fifth image 560 with the enhanced edge of the construction area marker in FIG. 5, is a second binary image with the enhanced edge of the construction area marker. Herein, a bidirectional six-lane urban road is used as an example. A road type is not limited in embodiments of this application. The image 601 is a unidirectional three-lane road. An area 603, an area 604, and an area 605 respectively indicate a left lane, a middle lane, and a right lane.

A junction point set of the at least one construction area marker and the road surface is clustered based on a first clustering method, to determine different construction areas. The first clustering method is that a distance between junction point sets that are of the at least one construction area marker and the road surface is less than or equal to a minimum distance threshold. The construction area includes the at least one construction area marker.

The distance between the junction point sets that are of the at least one construction area marker and the road surface may be calculated in distance calculation manners such as Euclidean distance, Manhattan distance, Mahalanobis distance, or the like, which is not limited in embodiments of this application.

The minimum distance threshold is set. If the distance between the junction point sets that are of the at least one construction area marker and the road surface is less than or equal to the minimum distance threshold, adjacent construction area markers are clustered together to belong to a same construction area. In FIG. 6, there are two clustered construction area markers, which separately are 606 and 607.

The clustered construction area markers separate discontinuous construction areas, and space between different construction areas may be used as available space in a vehicle control strategy, to improve road a rate of utilization.

Optionally, a point at a junction between the construction area marker and the road surface is projected to a vehicle coordinate system by using an offline or online calibration parameter of a camera carried on a movable platform and based on a projection theorem and a ground plane assumption, to obtain an aerial view image 602 of the construction area marker and the lane. Similarly, the distance between the junction point sets that are of the at least one construction area marker and the road surface may be obtained on the aerial view image 602 in distance calculation manners such as the Euclidean distance, the Manhattan distance, the Mahalanobis distance, and the like.

When the camera is a monocular camera, a depth loss of a two-dimensional image may cause adhesion and incorrect clustering of different construction area markers. Therefore, a marker clustering method based on the aerial view image 602 can make a clustering result of the construction area markers more accurate.

There are convex hull points on the enhanced edge of the construction area marker, and a point set formed by these convex hull points is the junction point set of the marker and the road surface.

FIG. 7 is a schematic flowchart of summarizing and reporting a road occupancy condition of a construction area according to an embodiment of this application. FIG. 7 is a specific implementation process of S205.

S701: Calculate a projection matrix based on a camera calibration parameter and a projection theorem, and project a junction point between a construction area marker and a road surface to a vehicle coordinate system, where the junction point in the vehicle coordinate system is mainly used to estimate a lane and a range that are occupied by the junction point.

S702: Detect a lane line to obtain location information of the lane line in the vehicle coordinate system, where the location information includes a lane width or lane line equation information.

It should be understood that, if a lane line detection function is invalid, the lane width is consistent with the lane width in S201, for example, an internationally specified lane width of 3.5 meters. If the lane line detection function is valid, the lane width in this step is a result of lane line detection, and the lane width obtained by using the result is more accurate.

S703: Estimate, in a voting manner, based on junction point information of the construction area marker and the location information of the lane line in the vehicle coordinate system, a lane on which the construction area marker is located, where a lane with a large quantity of votes is marked as a lane occupied by a construction area, to obtain information of the lane occupied by the construction area.

For example, in FIG. 6, most construction area markers are located on a left lane of 603. Therefore, the construction area occupies the left lane of 603.

S704: Estimate a boundary location of a point set of the construction area marker based on the junction point information of the construction area marker in the vehicle coordinate system, to obtain a road occupancy range of the construction area.

It should be understood that the boundary location of the point set of the construction area marker is obtained by estimating shortest and longest distances between these point sets in the vehicle coordinate system and an ego vehicle in lateral and longitudinal directions.

S705: Determine road occupancy information of the construction area based on the information of the lane occupied by the construction area and the road occupancy range of the construction area.

It should be understood that the road occupancy information of the construction area may be only the information of the lane occupied by the construction area, the road occupancy range of the construction area, or comprehensive information of the information of the lane occupied by the construction area and the road occupancy range of the construction area, which is not limited in embodiments of this application.

S706: Send the road occupancy information of the construction area to a vehicle control module.

It should be understood that the foregoing information of the lane occupied by the construction area and the road occupancy range occupied by the construction area may be summarized and reported in a form of a packet, which is not limited in embodiments of this application.

The vehicle control module may effectively plan a vehicle driving route based on reported road occupancy information and road occupancy range information of the construction area. In addition, compared with a complex solution based on a GPS and a high definition map, the reported solution is simpler and more effective. Furthermore, the road occupancy range information of the construction area may provide more abundant information for the vehicle control module, so that accuracy of a vehicle control decision is improved.

Optionally, S707: Track and update the road occupancy information of the construction area based on a result of a road occupancy condition of the construction area in a previous frame.

For example, a clustered construction area may be tracked based on a feature point matching algorithm, or a motion equation may be established, based on a Kalman filter algorithm, for a fitting curve of the junction point set of the construction area marker and the road surface, to track the curve and update a status of the curve.

Based on tracking and updating for the road occupancy condition of multi-frame fusion, accuracy and stability of a detection result of the construction area can be improved.

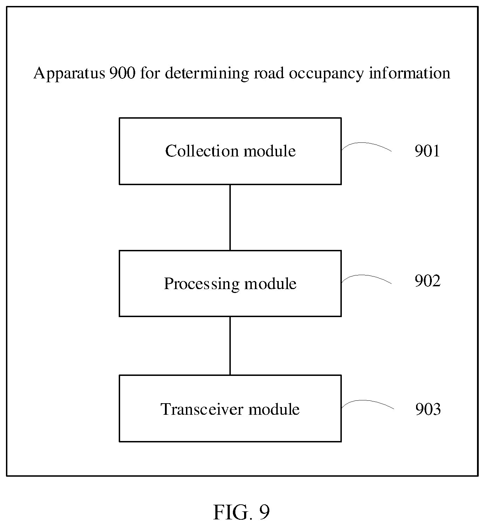

With reference to FIG. 1 to FIG. 8, the foregoing describes in detail embodiments of the method for determining road occupancy information of this application. The following describes embodiments of an apparatus of this application with reference to FIG. 9 to FIG. 10. For details that are not described in detail, refer to the foregoing embodiments of the method.

FIG. 9 is a schematic block diagram of an apparatus for determining road occupancy information according to an embodiment of this application.

The apparatus for determining the road occupancy information in FIG. 9 may be configured to implement corresponding functions in the embodiments in FIG. 1 to FIG. 8. To avoid repetition, details are not described again. The apparatus for determining road occupancy information in FIG. 9 may include a collection module 901, a processing module 902, and a transceiver module 903.

The collection module 901 is configured to obtain a first image. The processing module 902 is configured to: determine a first region of interest ROI based on the first image, where the first ROI includes at least one construction area marker; obtain a first binary image of the first ROI; perform edge enhancement on the at least one construction area marker that is in the first binary image to obtain a second binary image; obtain a junction point set of the at least one construction area marker and a road surface based on the second binary image; and determine road occupancy information of the at least one construction area marker based on the junction point set of the at least one construction area marker and the road surface. The transceiver module 903 is configured to send the road occupancy information, where the road occupancy information includes information of a lane on which the at least one construction area marker is located and/or road occupancy range information of a construction area, and the construction area includes the at least one construction area marker.

Optionally, in an embodiment, the processing module 902 is further configured to: perform a first morphological operation on the first binary image to obtain a first image, and perform a second morphological operation on the first binary image to obtain a second image; perform pixel-wise subtraction between the first image and the second image to obtain a third image; perform independent connected component detection on the first image, the second image, or the first binary image to obtain a fourth image; and perform an operation on the third image and the fourth image by using a label constraint-based watershed algorithm to obtain a fifth image, where the fifth image is the second binary image.

Optionally, in an embodiment, the first morphological operation includes a dilation operation, and the second morphological operation includes an erosion operation.

Optionally, in an embodiment, the first morphological operation includes a dilation operation of M iterations, and the second morphological operation includes an erosion operation of N iterations, where M and N are positive integers greater than or equal to 1.

Optionally, in an embodiment, the processing module 902 is further configured to: obtain the first ROI based on a lane width, a lane quantity, a first distance, and a second distance. A lateral length of the first ROI is determined based on the lane width and the lane quantity. A longitudinal length of the first ROI is determined based on the first distance and the second distance. The first distance indicates a shortest distance in the first image between a lane and a vehicle, and the second distance indicates a longest distance in the first image between the lane and the vehicle.

Optionally, in an embodiment, the processing module 902 is further configured to: perform a three-channel weighted sum operation based on a color space on the first ROI to obtain a single-channel image of the first ROI; where the color space includes an RGB color space, a YUV color space, or an XYZ color space; and perform binarization on the single-channel image to obtain the first binary image of the first ROI.

Optionally, in an embodiment, the processing module 902 is further configured to obtain the junction point set of the at least one construction area marker and the road surface based on a calibration parameter of the collection module and a projection theorem.

Optionally, in an embodiment, the processing module 902 is further configured to cluster, based on a first clustering method, the junction point set of the at least one construction area marker and the road surface to determine different construction areas. The first clustering method is that a distance between junction point sets that are of the at least one construction area marker and the road surface is less than or equal to a minimum distance threshold. The construction area includes the at least one construction area marker.

Optionally, in an embodiment, the processing module 902 is further configured to: detect a lane line to obtain location information of the lane line in a vehicle coordinate system; obtain, based on the junction point set of the at least one construction area marker and the road surface and the location information of the lane line, the information of the lane on which the at least one construction area marker is located; obtain the road occupancy range information of the construction area based on the junction point set of the at least one construction area marker and the road surface, where the construction area includes the at least one construction area marker; and determine the road occupancy information of the at least one construction area marker based on the information of the lane on which the at least one construction area marker is located and the road occupancy range information of the construction area.

Optionally, in an embodiment, the processing module 902 is further configured to: track and update the road occupancy information of the at least one construction area marker based on road occupancy information of the at least one construction area marker in a previous frame.

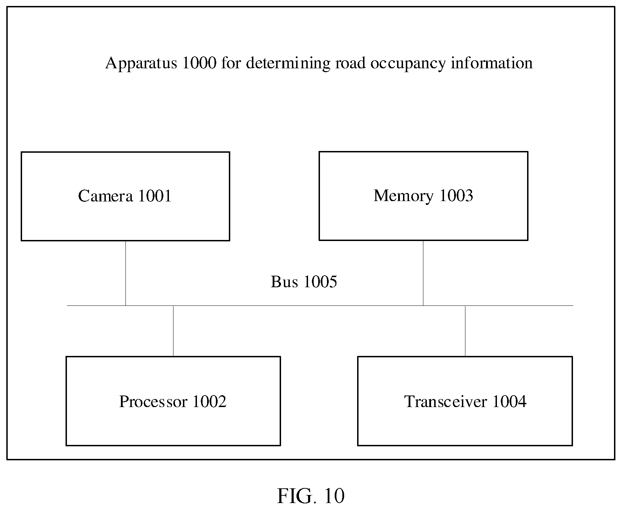

In an optional embodiment, the collection module 901 may be a camera 1001 in FIG. 10, the processing module 902 may be a processor 1002 in FIG. 10, and the transceiver module may be a transceiver 1004 in FIG. 10. Details are shown in FIG. 10.

FIG. 10 is a schematic block diagram of another apparatus for determining road occupancy information according to an embodiment of this application. The apparatus for determining road occupancy information in FIG. 10 may include: a camera 1001, a processor 1002, a memory 1003, a transceiver 1004, and a bus 1005. The camera 1001, the processor 1002, the memory 1003, and the transceiver 1004 are connected through the bus 1005. The memory 1003 is configured to store instructions. The processor 1002 is configured to execute the instructions stored in the memory 1003. The transceiver is configured to send information. Optionally, the memory 1003 may be coupled to the processor 1002 by using an interface, or integrated with the processor 1002.

In an implementation process, steps in the methods may be implemented by using a hardware integrated logic circuit in the processor 1002, or by using instructions in a form of software. The methods disclosed with reference to embodiments of this application may be directly performed by a hardware processor, or may be performed by a combination of hardware in the processor and a software module. The software module may be located in a mature storage medium in the art like a random access memory, a flash memory, a read-only memory, a programmable read-only memory, an electrically erasable programmable memory, or a register. The storage medium is located in the memory 1003, and the processor 1002 reads information in the memory 1003 and completes the steps in the foregoing methods in combination with hardware of the memory 1003. To avoid repetition, details are not described herein.

It should be understood that, in this embodiment of this application, the memory may include a read-only memory and a random access memory, and provides instructions and data to the processor. A part of the processor may further include a non-volatile random access memory. For example, the processor may further store device type information.

The apparatus for determining road occupancy information may be a vehicle having a road occupancy information determining function, or may be another component having the road occupancy information determining function. The apparatus for determining road occupancy information includes but is not limited to another sensor like an in-vehicle terminal, an in-vehicle controller, an in-vehicle block, an in-vehicle module, an in-vehicle component, an in-vehicle chip, an in-vehicle unit, an in-vehicle radar, or an in-vehicle camera. A vehicle may implement the method provided in this application by using the in-vehicle terminal, the in-vehicle controller, the in-vehicle block, the in-vehicle module, the in-vehicle component, the in-vehicle chip, the in-vehicle unit, or the in-vehicle radar or camera.

The apparatus for determining road occupancy information may be an intelligent terminal having a road occupancy information determining function other than a vehicle, or disposed in an intelligent terminal having a road occupancy information determining function other than a vehicle, or disposed in a component of the intelligent terminal. The intelligent terminal may be another terminal device like an intelligent transportation device, a smart household device, or a robot. The apparatus for determining road occupancy information includes but is not limited to an intelligent terminal or another sensor like a controller, a chip, a radar, or a camera in the intelligent terminal, and another component.

The apparatus for determining road occupancy information may be a general-purpose device or a dedicated device. During specific implementation, the apparatus may further be a desktop computer, a portable computer, a network server, a palmtop computer (personal digital assistant, PDA), a mobile phone, a tablet computer, a wireless terminal device, an embedded device, or another device with a processing function. A type of the apparatus for determining road occupancy information is not limited in embodiments of this application.

The apparatus for determining road occupancy information may alternatively be a chip or a processor having a processing function, and the apparatus for determining road occupancy information may include at least one processor. The processor may be a single-CPU (single-CPU) processor, or a multi-CPU (multi-CPU) processor. The chip or processor with a processing function may be disposed in the sensor, or may not be disposed in the sensor, but is disposed at a receive end of an output signal of the sensor.

An embodiment of this application further provides a system applied to unmanned driving or intelligent driving. The system includes at least one apparatus for determining road occupancy information mentioned in the foregoing embodiment of this application and at least one of other sensors such as a camera and a radar. At least one apparatus in the system may be integrated as an entire system or a device, or at least one apparatus in the system may be independently disposed as an element or an apparatus.

Further, any of the above systems may interact with a central controller of the vehicle to provide detection and/or fusion information for decision or control of driving of the vehicle.

An embodiment of this application further provides a vehicle. The vehicle includes at least one apparatus for determining road occupancy information mentioned in the foregoing embodiment of this application or any one of the foregoing systems.

It should be understood that the term "and/or" in this specification describes only an association relationship between associated objects and indicates that three relationships may exist. For example, A and/or B may represent the following three cases: Only A exists, both A and B exist, and only B exists. In addition, the character "/" in this specification usually indicates an "or" relationship between associated objects.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods for particular applications to implement the described functions, but this implementation should not be considered as beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the function is implemented in a form of a software functional unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (Read-Only Memory, ROM), a random access memory (Random Access Memory, RAM), a magnetic disk, or an optical disc.

## Claims

1. A method for determining road occupancy information, comprising:
obtaining a first image, and determining (S201) a first region of interest ROI based on the first image, wherein the first ROI comprises at least one construction area marker;
obtaining (S202) a first binary image (510) of the first ROI;
performing (S203) edge enhancement on the at least one construction area marker that is in the first binary image to obtain a second binary image (560);
obtaining (S204) a junction point set of the at least one construction area marker and a road surface based on the second binary image (560);
determining (S205) road occupancy information of the at least one construction area marker based on the junction point set of the at least one construction area marker and the road surface, wherein the junction point set of the at least one construction area marker and the road surface is clustered based on a first clustering method, to determine different construction areas, wherein the first clustering method is clustering, based on a first clustering method, the junction point set of the at least one construction area marker and the road surface to determine different construction areas, wherein the first clustering method is that a distance between junction point sets that are of the at least one construction area marker and the road surface is less than or equal to a minimum distance threshold; and
sending (S206) the road occupancy information, wherein the road occupancy information comprises information of a lane on which the at least one construction area marker is located and/or road occupancy range information of a construction area, and the construction area comprises the at least one construction area marker,
wherein the performing edge enhancement on the at least one construction area marker that is in the first binary image (510) to obtain a second binary image (560) comprises:
performing a first morphological operation on the first binary image to obtain the first image (520), and performing a second morphological operation on the first binary image (510) to obtain a second image (530);
performing pixel-wise subtraction between the first image (520) and the second image (530) to obtain a third image (540);
performing independent connected component detection on the first image (520), the second image (530), or the first binary image (510) to obtain a fourth image (550); and
performing an operation on the third image (540) and the fourth image (550) by using a label constraint-based watershed algorithm, to obtain a fifth image (560), wherein the fifth image (560) is the second binary image (560).

2. The method according to claim 1, wherein the first morphological operation comprises a dilation operation, and the second morphological operation comprises an erosion operation.

3. The method according to claim 1 or 2, wherein the first morphological operation comprises a dilation operation of M iterations, and the second morphological operation comprises an erosion operation of N iterations, wherein M and N are positive integers greater than or equal to 1.

4. The method according to claim 1, wherein the first ROI comprises:
obtaining the first ROI based on a lane width, a lane quantity, a first distance, and a second distance, wherein a lateral length of the first ROI is determined based on the lane width and the lane quantity, a longitudinal length of the first ROI is determined based on the first distance and the second distance, the first distance indicates a shortest distance in the first image that is obtained after a camera blind spot is excluded and that is between a lane on which a vehicle is located and the vehicle, and the second distance indicates a longest observable distance in the first image between the lane on which the vehicle is located and the vehicle.

5. The method according to claim 1, wherein the obtaining a first binary image of the first ROI comprises:
performing a three-channel weighted sum operation based on a color space on the first ROI to obtain a single-channel image of the first ROI, wherein the color space comprises an RGB color space, a YUV color space, or an XYZ color space; and
performing binarization on the single-channel image to obtain the first binary image of the first ROI.

6. The method according to claim 1, wherein the obtaining a junction point set of the at least one construction area marker and a road surface comprises:
obtaining the junction point set of the at least one construction area marker and the road

7. The method according to any one of claims 1 to 6, wherein the determining road occupancy information of the at least one construction area marker comprises:
detecting a lane line to obtain location information of the lane line in a vehicle coordinate system;
obtaining, based on the junction point set of the at least one construction area marker and the road surface and the location information of the lane line, the information of the lane on which the at least one construction area marker is located;
obtaining the road occupancy range information of the construction area based on the junction point set of the at least one construction area marker and the road surface; and
determining the road occupancy information of the at least one construction area marker based on the information of the lane on which the at least one construction area marker is located and the road occupancy range information of the construction area.

8. The method according to any one of claims 1 to 7, wherein the determining road occupancy information of the at least one construction area marker further comprises:
tracking and updating the road occupancy information of the at least one construction area marker based on road occupancy information of the at least one construction area marker in a previous frame.

9. An apparatus (900) for determining road occupancy information, comprising a collection module (901), a processing module (902), and a transceiver module (903), wherein
the collection module (901) is configured to obtain a first image;
the processing module (902) is configured to:
determine a first region of interest ROI based on the first image, wherein the first ROI comprises at least one construction area marker; and obtain a first binary image of the first ROI;
perform edge enhancement on the at least one construction area marker that is in the first binary image (510) to obtain a second binary image (560);
obtain a junction point set of the at least one construction area marker and a road surface based on the second binary image; and
determine road occupancy information of the at least one construction area marker based on the junction point set of the at least one construction area marker and the road surface, wherein the junction point set of the at least one construction area marker and the road surface is clustered based on a first clustering method, to determine different construction areas, wherein the first clustering method is clustering, based on a first clustering method, the junction point set of the at least one construction area marker and the road surface to determine different construction areas, wherein the first clustering method is that a distance between junction point sets that are of the at least one construction area marker and the road surface is less than or equal to a minimum distance threshold; and
the transceiver module (903) is configured to send the road occupancy information, wherein the road occupancy information comprises information of a lane on which the at least one construction area marker is located and/or road occupancy range information of a construction area, and the construction area comprises the at least one construction area marker,
wherein the processing module (902) is further configured to:
perform a first morphological operation on the first binary image (510) to obtain the first image (520), and perform a second morphological operation on the first binary image (510) to obtain a second image (530);
perform pixel-wise subtraction between the first image (520) and the second image (530) to obtain a third image (540);
perform independent connected component detection on the first image (520), the second image (530), or the first binary image (510) to obtain a fourth image (550); and
perform an operation on the third image (540) and the fourth image (550) by using a label constraint-based watershed algorithm, to obtain a fifth image (560) wherein the fifth image (560) is the second binary image (560).

10. The apparatus (900) according to claim 9, wherein the first morphological operation comprises a dilation operation, and the second morphological operation comprises an erosion operation.

11. The apparatus (900) according to claim 9 or 10, wherein the first morphological operation comprises a dilation operation of M iterations, and the second morphological operation comprises an erosion operation of N iterations, wherein M and N are positive integers greater than or equal to 1.

12. A computer-readable medium, comprising computer instructions, wherein when the computer instructions are run on an apparatus (900), the apparatus (900) is enabled to perform the method according to any one of claims 1 to 8.

## Patentansprüche

1. Verfahren zum Bestimmen von Straßenbelegungsinformationen, umfassend:
Erhalten eines ersten Bildes und Bestimmen (S201) einer ersten Region von Interesse ROI basierend auf dem ersten Bild, wobei die erste ROI mindestens eine Baubereichsmarkierung umfasst;
Erhalten (S202) eines ersten Binärbildes (510) der ersten ROI;
Durchführen (S203) einer Kantenverbesserung an der mindestens einen Baubereichsmarkierung, die in dem ersten Binärbild ist, um ein zweites Binärbild (560) zu erhalten;
Erhalten (S204) eines Verknüpfungspunktsatzes der mindestens einen Baubereichsmarkierung und einer Straßenoberfläche basierend auf dem zweiten Binärbild (560);
Bestimmen (S205) von Straßenbelegungsinformationen der mindestens einen Baubereichsmarkierung basierend auf dem Verknüpfungspunktsatz der mindestens einen Baubereichsmarkierung und der Straßenoberfläche, wobei der Verknüpfungspunktsatz der mindestens einen Baubereichsmarkierung und der Straßenoberfläche basierend auf einem ersten Clustering-Verfahren geclustert ist, um unterschiedliche Baubereiche zu bestimmen, wobei das erste Clustering-Verfahren basierend auf einem ersten Clustering-Verfahren den Verknüpfungspunktsatz der mindestens einen Baubereichsmarkierung und der Straßenoberfläche clustert, um unterschiedliche Baubereiche zu bestimmen, wobei das erste Clustering-Verfahren ist, dass eine Distanz zwischen Verknüpfungspunktsätzen, die von der mindestens einen Baubereichsmarkierung und der Straßenoberfläche sind, kleiner als oder gleich einem minimalen Distanzschwellenwert ist; und
Senden (S206) der Straßenbelegungsinformationen, wobei die Straßenbelegungsinformationen Informationen einer Fahrspur, auf der sich die mindestens eine Baubereichsmarkierung befindet, und/oder Straßenbelegungsreichweiteninformationen eines Baubereichs umfassen und der Baubereich die mindestens eine Baubereichsmarkierung umfasst,
wobei das Durchführen der Kantenverbesserung an der mindestens einen Baubereichsmarkierung, die in dem ersten Binärbild (510) ist, um ein zweites Binärbild (560) zu erhalten, Folgendes umfasst:
Durchführen einer ersten morphologischen Operation an dem ersten Binärbild, um das erste Bild (520) zu erhalten, und Durchführen einer zweiten morphologischen Operation an dem ersten Binärbild (510), um ein zweites Bild (530) zu erhalten;
Durchführen einer pixelweisen Subtraktion zwischen dem ersten Bild (520) und dem zweiten Bild (530), um ein drittes Bild (540) zu erhalten;
Durchführen einer unabhängigen Erkennung verbundener Komponenten an dem ersten Bild (520), dem zweiten Bild (530) oder dem ersten Binärbild (510), um ein viertes Bild (550) zu erhalten; und
Durchführen einer Operation an dem dritten Bild (540) und dem vierten Bild (550) mithilfe eines auf einer Kennzeichnungsbeschränkung basierenden Wasserscheidenalgorithmus, um ein fünftes Bild (560) zu erhalten, wobei das fünfte Bild (560) das zweite Binärbild (560) ist.

2. Verfahren nach Anspruch 1, wobei die erste morphologische Operation eine Dilatationsoperation umfasst und die zweite morphologische Operation eine Erosionsoperation umfasst.

3. Verfahren nach Anspruch 1 oder 2, wobei die erste morphologische Operation eine Dilatationsoperation von M Iterationen umfasst und die zweite morphologische Operation eine Erosionsoperation von N Iterationen umfasst, wobei M und N positive ganze Zahlen größer oder gleich 1 sind.

4. Verfahren nach Anspruch 1, wobei die erste ROI Folgendes umfasst:
Erhalten der ersten ROI basierend auf einer Fahrspurbreite, einer Fahrspurquantität, einer ersten Distanz und einer zweiten Distanz, wobei eine laterale Länge der ersten ROI basierend auf der Fahrspurbreite und der Fahrspurquantität bestimmt wird, eine Längslänge der ersten ROI basierend auf der ersten Distanz und der zweiten Distanz bestimmt wird, die erste Distanz eine kürzeste Distanz in dem ersten Bild angibt, die erhalten wird, nachdem ein toter Winkel einer Kamera ausgeschlossen wird, und die zwischen einer Fahrspur, auf der sich ein Fahrzeug befindet, und dem Fahrzeug ist, und die zweite Distanz eine längste beobachtbare Distanz in dem ersten Bild zwischen der Fahrspur, auf der sich das Fahrzeug befindet, und dem Fahrzeug angibt.

5. Verfahren nach Anspruch 1, wobei das Erhalten eines ersten Binärbildes der ersten ROI Folgendes umfasst:
Durchführen einer dreikanaligen gewichteten Summenoperation basierend auf einem Farbraum auf der ersten ROI, um ein einkanaliges Bild der ersten ROI zu erhalten, wobei der Farbraum einen RGB-Farbraum, einen YUV-Farbraum oder einen XYZ-Farbraum umfasst; und
Durchführen einer Binarisierung auf dem einkanaligen Bild, um das erste Binärbild der ersten ROI zu erhalten.

6. Verfahren nach Anspruch 1, wobei das Erhalten eines Verknüpfungspunktsatzes der mindestens einen Baubereichsmarkierung und einer Straßenoberfläche Folgendes umfasst:
Erhalten des Verknüpfungspunktsatzes der mindestens einen Baubereichsmarkierung und der Straße

7. Verfahren nach einem der Ansprüche 1 bis 6, wobei das Bestimmen von Straßenbelegungsinformationen der mindestens einen Baubereichsmarkierung Folgendes umfasst:
Erkennen einer Fahrspurlinie, um Standortinformationen der Fahrspurlinie in einem Fahrzeugkoordinatensystem zu erhalten;
Erhalten der Informationen der Fahrspur, auf der sich die mindestens eine Baubereichsmarkierung befindet, basierend auf dem Verknüpfungspunktsatz der mindestens einen Baubereichsmarkierung und der Straßenoberfläche und der Standortinformationen der Fahrspurlinie;
Erhalten der Straßenbelegungsreichweiteninformationen des Baubereichs basierend auf dem Verknüpfungspunktsatz der mindestens einen Baubereichsmarkierung und der Straßenoberfläche; und
Bestimmen der Straßenbelegungsinformationen der mindestens einen Baubereichsmarkierung basierend auf den Informationen der Fahrspur, auf der sich die mindestens eine Baubereichsmarkierung befindet, und den Straßenbelegungsreichweiteninformationen des Baubereichs.

8. Verfahren nach einem der Ansprüche 1 bis 7, wobei das Bestimmen von Straßenbelegungsinformationen der mindestens einen Baubereichsmarkierung ferner Folgendes umfasst:
Verfolgen und Aktualisieren der Straßenbelegungsinformationen der mindestens einen Baubereichsmarkierung basierend auf den Straßenbelegungsinformationen der mindestens einen Baubereichsmarkierung in einem vorherigen Frame.

9. Vorrichtung (900) zum Bestimmen von Straßenbelegungsinformationen, umfassend ein Sammelmodul (901), ein Verarbeitungsmodul (902) und ein Transceivermodul (903), wobei das Sammelmodul (901) dazu konfiguriert ist, ein erstes Bild zu erhalten;
das Verarbeitungsmodul (902) zu Folgendem konfiguriert ist:
Bestimmen einer ersten Region von Interesse ROI basierend auf dem ersten Bild, wobei die erste ROI mindestens eine Baubereichsmarkierung umfasst; und Erhalten eines ersten Binärbildes der ersten ROI;
Durchführen der Kantenverbesserung an der mindestens einen Baubereichsmarkierung, die in dem ersten Binärbild (510) ist, um ein zweites Binärbild (560) zu erhalten;
Erhalten eines Verknüpfungspunktsatzes der mindestens einen Baubereichsmarkierung und einer Straßenoberfläche basierend auf dem zweiten Binärbild; und
Bestimmen von Straßenbelegungsinformationen der mindestens einen Baubereichsmarkierung basierend auf dem Verknüpfungspunktsatz der mindestens einen Baubereichsmarkierung und der Straßenoberfläche, wobei der Verknüpfungspunktsatz der mindestens einen Baubereichsmarkierung und der Straßenoberfläche basierend auf einem ersten Clustering-Verfahren geclustert ist, um unterschiedliche Baubereiche zu bestimmen, wobei das erste Clustering-Verfahren basierend auf einem ersten Clustering-Verfahren den Verknüpfungspunktsatz der mindestens einen Baubereichsmarkierung und der Straßenoberfläche clustert, um unterschiedliche Baubereiche zu bestimmen, wobei das erste Clustering-Verfahren ist, dass eine Distanz zwischen Verknüpfungspunktsätzen, die von der mindestens einen Baubereichsmarkierung und der Straßenoberfläche sind, kleiner als oder gleich einem minimalen Distanzschwellenwert ist; und
das Transceivermodul (903) dazu konfiguriert ist, die Straßenbelegungsinformationen zu senden, wobei die Straßenbelegungsinformationen Informationen einer Fahrspur, auf der sich die mindestens eine Baubereichsmarkierung befindet, und/oder Straßenbelegungsreichweiteninformationen eines Baubereichs umfassen und der Baubereich die mindestens eine Baubereichsmarkierung umfasst,
wobei das Verarbeitungsmodul (902) ferner zu Folgendem konfiguriert ist:
Durchführen einer ersten morphologischen Operation an dem ersten Binärbild (510), um das erste Bild (520) zu erhalten, und Durchführen einer zweiten morphologischen Operation an dem ersten Binärbild (510), um ein zweites Bild (530) zu erhalten;
Durchführen einer pixelweisen Subtraktion zwischen dem ersten Bild (520) und dem zweiten Bild (530), um ein drittes Bild (540) zu erhalten;
Durchführen einer unabhängigen Erkennung verbundener Komponenten an dem ersten Bild (520), dem zweiten Bild (530) oder dem ersten Binärbild (510), um ein viertes Bild (550) zu erhalten; und
Durchführen einer Operation an dem dritten Bild (540) und dem vierten Bild (550) mithilfe eines auf einer Kennzeichnungsbeschränkung basierenden Wasserscheidenalgorithmus, um ein fünftes Bild (560) zu erhalten, wobei das fünfte Bild (560) das zweite Binärbild (560) ist.

10. Vorrichtung (900) nach Anspruch 9, wobei die erste morphologische Operation eine Dilatationsoperation umfasst und die zweite morphologische Operation eine Erosionsoperation umfasst.

11. Vorrichtung (900) nach Anspruch 9 oder 10, wobei die erste morphologische Operation eine Dilatationsoperation von M Iterationen umfasst und die zweite morphologische Operation eine Erosionsoperation von N Iterationen umfasst, wobei M und N positive ganze Zahlen größer oder gleich 1 sind.

12. Computerlesbares Medium, umfassend Computeranweisungen, wobei, wenn die Computeranweisungen auf einer Vorrichtung (900) ausgeführt werden, die Vorrichtung (900) in die Lage versetzt wird, das Verfahren nach einem der Ansprüche 1 bis 8 durchzuführen.

## Revendications

1. Procédé de détermination d'informations d'occupation de route, comprenant :
l'obtention d'une première image et la détermination (S201) d'une première région d'intérêt ROI sur la base de la première image, dans lequel la première ROI comprend au moins un marqueur de zone de construction ;
l'obtention (S202) d'une première image binaire (510) de la première ROI ;
la réalisation (S203) de l'amélioration des contours sur l'au moins un marqueur de zone de construction qui se trouve dans la première image binaire pour obtenir une seconde image binaire (560) ;
l'obtention (S204) d'un ensemble de points de jonction de l'au moins un marqueur de zone de construction et une surface de route sur la base de la seconde image binaire (560) ;
la détermination (S205) d'informations d'occupation de route de l'au moins un marqueur de zone de construction sur la base de l'ensemble des points de jonction de l'au moins un marqueur de zone de construction et de la surface de la route, dans lequel l'ensemble des points de jonction de l'au moins un marqueur de zone de construction et de la surface de la route est regroupé sur la base d'un premier procédé de regroupement pour déterminer différentes zones de construction, dans lequel le premier procédé de regroupement consiste à regrouper, sur la base d'un premier procédé de regroupement, l'ensemble des points de jonction de l'au moins un marqueur de zone de construction et de la surface de la route pour déterminer différentes zones de construction, dans lequel le premier procédé de regroupement consiste à ce que la distance entre les ensembles de points de jonction qui sont de l'au moins un marqueur de zone de construction et de la surface de la route soit inférieure ou égale à un seuil de distance minimal ; et
l'envoi (S206) d'informations d'occupation de route, dans lequel les informations d'occupation de route comprennent des informations sur une voie sur laquelle se trouve l'au moins un marqueur de zone de construction et/ou des informations de portée d'occupation de route d'une zone de construction, et la zone de construction comprend l'au moins un marqueur de zone de construction,
dans lequel la réalisation de l'amélioration des contours sur l'au moins un marqueur de zone de construction qui se trouve dans la première image binaire (510) pour obtenir une seconde image binaire (560) comprend :
la réalisation d'une première opération morphologique sur la première image binaire pour obtenir la première image (520), et la réalisation d'une seconde opération morphologique sur la première image binaire (510) pour obtenir une deuxième image (530) ;
la réalisation d'une soustraction pixel par pixel entre la première image (520) et la deuxième image (530) pour obtenir une troisième image (540) ;
la réalisation d'une détection indépendante des composantes connexes sur la première image (520), la deuxième image (530) ou la première image binaire (510) pour obtenir une quatrième image (550) ; et
la réalisation d'une opération sur la troisième image (540) et la quatrième image (550) à l'aide d'un algorithme de ligne de partage des eaux sur la base d'une contrainte d'étiquette, pour obtenir une cinquième image (560), dans lequel la cinquième image (560) est la seconde image binaire (560).

2. Procédé selon la revendication 1, dans lequel la première opération morphologique comprend une opération de dilatation et la seconde opération morphologique comprend une opération d'érosion.

3. Procédé selon la revendication 1 ou 2, dans lequel la première opération morphologique comprend une opération de dilatation de M itérations, et la seconde opération morphologique comprend une opération d'érosion de N itérations, dans lequel M et N sont des entiers positifs supérieurs ou égaux à 1.

4. Procédé selon la revendication 1, dans lequel la première ROI comprend :
l'obtention de la première ROI sur la base de la largeur de voie, du nombre de voies, d'une première distance et d'une seconde distance, dans lequel la longueur latérale de la première ROI est déterminée sur la base de la largeur de voie et du nombre de voies, la longueur longitudinale de la première ROI est déterminée sur la base de la première distance et de la seconde distance, la première distance indique la distance la plus courte dans la première image obtenue après exclusion de l'angle mort de la caméra et qui se trouve entre une voie sur laquelle se trouve un véhicule et le véhicule, et la seconde distance indique la distance la plus longue observable dans la première image entre la voie sur laquelle se trouve le véhicule et le véhicule.

5. Procédé selon la revendication 1, dans lequel l'obtention d'une première image binaire de la première ROI comprend :
la réalisation d'une opération de somme pondérée à trois canaux sur la base d'un espace colorimétrique sur la première ROI afin d'obtenir une image monocanal de la première ROI, dans lequel l'espace colorimétrique est un espace colorimétrique RGB, un espace colorimétrique YUV ou un espace colorimétrique XYZ ; et
la réalisation d'une binarisation sur l'image monocanal pour obtenir la première image binaire de la première ROI.

6. Procédé selon la revendication 1, dans lequel l'obtention d'un ensemble de points de jonction de l'au moins un marqueur de zone de construction et d'une surface de route comprend :
l'obtention de l'ensemble des points de jonction de l'au moins un marqueur de zone de construction et de la route

7. Procédé selon l'une quelconque des revendications 1 à 6, dans lequel la détermination d'informations d'occupation de route de l'au moins un marqueur de zone de construction comprend :
la détection d'une ligne de voie pour obtenir des informations d'emplacement de la ligne de voie dans un système de coordonnées de véhicule ;
l'obtention, sur la base de l'ensemble des points de jonction de l'au moins un marqueur de zone de construction et de la surface de la route et des informations d'emplacement de la ligne de voie, des informations de la voie sur laquelle se trouve l'au moins un marqueur de zone de construction ;
l'obtention des informations de portée d'occupation de route de la zone de construction sur la base de l'ensemble des points de jonction de l'au moins un marqueur de zone de construction et de la surface de la route ; et
la détermination d'informations d'occupation de route de l'au moins un marqueur de zone de construction sur la base des informations de la voie sur laquelle se trouve l'au moins un marqueur de zone de construction et des informations de portée d'occupation de route de la zone de construction.

8. Procédé selon l'une quelconque des revendications 1 à 7, dans lequel la détermination d'informations d'occupation de route de l'au moins un marqueur de zone de construction comprend en outre : le suivi et la mise à jour des informations d'occupation de route de l'au moins un marqueur de zone de construction sur la base des informations d'occupation de route de l'au moins un marqueur de zone de construction dans une trame précédente.

9. Appareil (900) pour déterminer les informations d'occupation de route, comprenant un module de collecte (901), un module de traitement (902) et un module émetteur-récepteur (903), dans lequel
le module de collecte (901) est configuré pour obtenir une première image ;
le module de traitement (902) est configuré pour :
déterminer une première région d'intérêt (ROI) sur la base de la première image, dans lequel la première ROI comprend au moins un marqueur de zone de construction ; et obtenir une première image binaire de la première ROI ;
réaliser l'amélioration des contours sur l'au moins un marqueur de zone de construction qui se trouve dans la première image binaire (510) pour obtenir une seconde image binaire (560) ;
obtenir un ensemble de points de jonction de l'au moins un marqueur de zone de construction et d'une surface de route sur la base de la seconde image binaire ; et
déterminer les informations d'occupation de route de l'au moins un marqueur de zone de construction sur la base de l'ensemble des points de jonction de l'au moins un marqueur de zone de construction et de la surface de la route, dans lequel l'ensemble des points de jonction de l'au moins un marqueur de zone de construction et de la surface de la route est regroupé sur la base d'un premier procédé de regroupement pour déterminer différentes zones de construction, dans lequel le premier procédé de regroupement consiste à regrouper, sur la base d'un premier procédé de regroupement, l'ensemble des points de jonction de l'au moins un marqueur de zone de construction et de la surface de la route pour déterminer différentes zones de construction, dans lequel le premier procédé de regroupement consiste à ce que la distance entre les ensembles de points de jonction qui sont de l'au moins un marqueur de zone de construction et de la surface de la route soit inférieure ou égale à un seuil de distance minimal ; et
le module émetteur-récepteur (903) est configuré pour envoyer des informations d'occupation de route, dans lequel les informations d'occupation de route comprennent des informations sur une voie sur laquelle se trouve l'au moins un marqueur de zone de construction et/ou des informations de portée d'occupation de route d'une zone de construction, et la zone de construction comprend l'au moins un marqueur de zone de construction,
dans lequel le module de traitement (902) est en outre configuré pour :
réaliser une première opération morphologique sur la première image binaire (510) pour obtenir la première image (520), et réaliser une seconde opération morphologique sur la première image binaire (510) pour obtenir une deuxième image (530) ;
réaliser une soustraction pixel par pixel entre la première image (520) et la deuxième image (530) pour obtenir une troisième image (540) ;
réaliser une détection indépendante des composantes connexes sur la première image (520), la deuxième image (530) ou la première image binaire (510) pour obtenir une quatrième image (550) ; et réaliser une opération sur la troisième image (540) et la quatrième image (550) à l'aide d'un algorithme de ligne de partage des eaux sur la base d'une contrainte d'étiquette, pour obtenir une cinquième image (560), dans lequel la cinquième image (560) est la seconde image binaire (560).

10. Appareil (900) selon la revendication 9, dans lequel la première opération morphologique comprend une opération de dilatation et la seconde opération morphologique comprend une opération d'érosion.

11. Appareil (900) selon la revendication 9 ou 10, dans lequel la première opération morphologique comprend une opération de dilatation de M itérations, et la seconde opération morphologique comprend une opération d'érosion de N itérations, dans lequel M et N sont des entiers positifs supérieurs ou égaux à 1.

12. Support de stockage lisible par ordinateur, comprenant des instructions informatiques, dans lequel lorsque les instructions informatiques sont exécutées sur un appareil (900), l'appareil (900) est activé pour réaliser le procédé selon l'une quelconque des revendications 1 à 8.
